Europäisches Patentamt

(19) European Patent Office   (11) Publication number: **0 209 164**
**B1**

Office européen des brevets

(12) **EUROPEAN PATENT SPECIFICATION**

(45) Date of publication of the patent specification:
**04.04.90**

(21) Application number: **86200772.1**

(22) Date of filing: **06.05.86**

(51) Int. Cl.⁴: **G01D 5/12, G05D 3/00**

(54) **Control device.**

(30) Priority: **17.05.85 SE 8502438**

(43) Date of publication of application:
**21.01.87 Bulletin 87/4**

(45) Publication of the grant of the patent:
**04.04.90 Bulletin 90/14**

(84) Designated Contracting States:
**AT CH DE FR GB IT LI**

(56) References cited:
**DE-A- 3 328 849**
**DE-A- 3 431 523**

(73) Proprietor: **SAAB-SCANIA AKTIEBOLAG, Fack,
S-581 88 Linköping(SE)**

(72) Inventor: **Nordström, Lennart Knut, Liljegatan 13,
S-582 63 Linköping(SE)**

(74) Representative: **Lundquist, Arne, Patent Department
SAAB-SCANIA AB, S-581 88 Linköping(SE)**

ACTORUM AG

## Description

The present invention relates generally to a control device which is so arranged that manual control movements give rise to electrical signals that serve to adjust the position of an element, comprising a body part that forms a supporting surface which is intended to support the hand of an operator while the control movements are being carried out, a control stick which extends outwardly from the supporting surface and comprises two stick parts arranged one on top of the other in the lengthwise direction of the control stick, of which the first stick part is stationary with respect to the body part while the second stick part, upon which the control movements are performed, is movable forwards, backwards and laterally relative to the first stick part to and from a neutral position, wherein the stick parts are so arranged that a control movement which is performed on the second stick part takes place as a swinging in the above mentioned directions about a center or a zone that is located in a cavity in the first stick part, and a signal emitting device responsive to the movement of the second stick part and electrically connected with the element for generating signals for adjusting the element in dependence upon the control movements of the second stick part.

A control device of this type is known from Swedish Patent No. 8 203 351-5 wherein the center about which the control stick swings is defined by a universal joint which connects the second stick part with the first and permits control movements about two swinging axes. The dimensions of the stick are suitable for its being embraced by a hand, and it is evident that the interior space in such a control stick must be small. This makes it difficult to build in a universal joint, which is required to have good strength as well as freedom from loose play. It is almost impossible to provide enough space in the cavity in the stick for a signal emitting device in addition to such a universal joint. One way of solving this structural problem is to dispose the signal emitting devices outside the stick part itself. Such a control device is described in Swedish Patent No. 8 203 350-7. In this control device stick movements are transferred to the signal emitters by means of a link system which, as is apparent from the drawings, occupies a large space and has a heavy weight. In connection with an aircraft this is not desirable. In addition, there is probably an increased risk of play or binding owing to several links being activated during use.

The object of the present invention is therefore to provide a control device wherein the complicated and expensive universal joint is replaced by a simpler and more compact device which thus leaves place for the signal emitting device also within the control stick.

This object is achieved by means of a control device wherein both stick parts are connected with one another by means of a rod-shaped spring member extending centrally through the cavity in the lengthwise direction of the control stick, which spring member has a defined neutral position, the swinging movement of the second stick part away from said neutral position producing an opposing moment that tends to return the second stick portion to the neutral position, and in that the signal emitting device is contained in the cavity alongside the spring member and arranged to sense the position of the second stick part relativ to the first stick part.

The invention is now more particularly described with reference to the accompanying drawings, wherein:

Fig. 1 is a partial sectional view of a control device from the side;
Fig. 2 is a view in longitudinal section along the line II–II in Fig. 1;
Fig. 3 is a cross-section on the line III–III in Fig. 2 on an enlarged scale;
Figs. 4–6 illustrate the control device in an alternative embodiment, wherein
Fig. 5 is a longitudinal section on the line V–V in Fig. 4; and
Fig. 6 is a cross-section on the line VI–VI in Fig. 5.

A number of application fields can be thought of for the invention. In the drawings there is illustrated an example of an airplane application wherein the control device is employed for maneuvering a radar antenna. Other fields in which a control device of the type that the invention relates to can be used are for example sighting devices, land vehicles, vessels, industrial robots, loaders and digging machines.

The control device illustrated in the drawings comprises a body part 1 that can be stationary or movable in an airplane wherein, in the latter case, the control device can be arranged in the airplane cabin as disclosed in Swedish patent No. 8 203 351-5. The top of the body part forms a supporting surface 2. In the direction outward from the latter there extends a control stick 3 that comprises two parts arranged one on top of the other in the lengthwise direction of the stick, namely a first part 4 that is immovably secured to the body part 1 and a second part 5 that is swingable relative to the first part. During control movements, that is, when the second stick part is caused to swing relative to the first stick part, the supporting surface 2 constitutes support for an operator's hand and thereby provides a reference for precise control movements.

The two stick parts are coupled together by means of a rod-shaped spring member 6 that extends centrally through a cavity 7 through the stick. The spring member 6 has its one end secured by a transverse rib 9 or the like belonging to the second movable stick part 5 and has its other end securely clamped in a rib element in the body part 1 that can be located at approximately the level of the supporting surface 2. In its unloaded condition the spring member defines the neutral position of the control stick, that is, the position that is shown in the drawing. The characteristic of the spring member and thus of the control stick is determined by the magnitude of bowing stiffness of the spring member and also by the location of the point or zone about which the second stick part swings for control movements. These two parameters are in turn determined by the cross-section area and geometry of the member, and also by the variation in cross-section along the free length of the member.

In these respects the invention aims at a configuration of the control stick which is as good as possible ergonometrically, and for this it is important that the resistance moment of the spring member 6, considered in the various directions of swinging that may be able to occur, is well balanced to the physiological conditions under which an operator exerts force upon the control stick with his hand. These conditions are in fact not equally good in all directions.

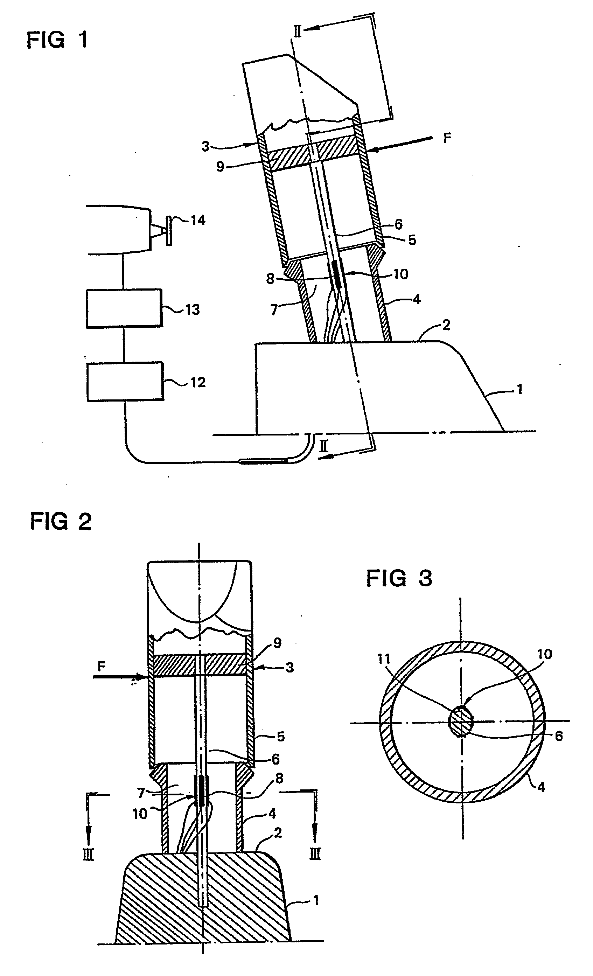

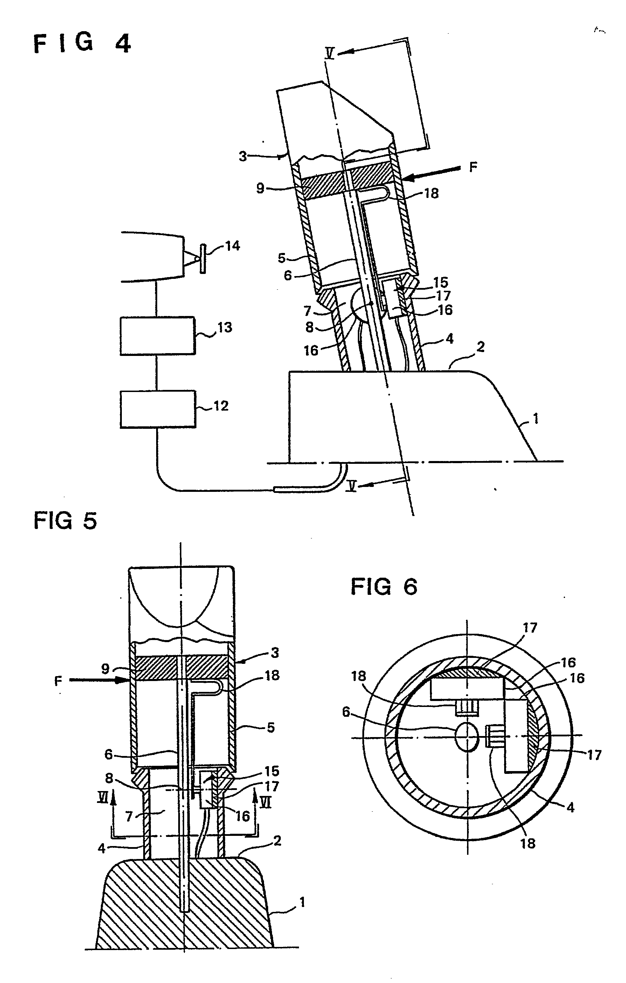

By reason of this the control device in the preferred embodiments shown in the drawings has a spring member 6 with an elliptical cross-section. With respect to the mentioned physiological conditions, the cross-section ought to be so oriented that the minor axis of the ellipse and the resistance moment of the spring member that is related to it applies during sideward control movements when a force F acts as in Figs. 2 and 5 and the operator performs a sideways movement of the hand and forearm. In this first axis of the control stick it is harder for him to exert muscular force than when he bends his hand in a movement forward or backward and the stick is given a force F', see Figs. 1 and 4. In the second axis the stick should therefore have a larger resistance moment corresponding to the major axis of the ellipse.

The spring member 6 can suitably have a constant cross-section area along the whole of its free length as the drawing shows. If a maneuvering force is applied in any arbitrary direction perpendicularly to the longitudinal axis of the stick and at the elevation of the transverse rib 9, the center or zone 8 of swinging of the spring member will be located at one-third of the free length from the securement point in the body part 1. Other forms of the spring member are possible as alternatives, for example a conical or pyramidal downwardly increasing cross-section area, through which the mentioned center or zone of turning will be located at a different place along the spring member.

When the stick is maneuvered it is so grasped by the operator's hand that the two parts of the stick are embraced, whereby at least the little finger surrounds the first part 4 and the hand is supported against the supporting surface 2. With this the center or zone 8 of swinging of the stick will be located in the middle of the gripping position of the hand. When the stick is taken out of its neutral position the spring member gives rise to stick forces that tend to return the stick to its neutral position.

For generation of signals that represent the position of the second stick part in relation to the first one, a signal emitting device is arranged, according to a characteristic of the invention, alongside the spring member 6. Various solutions based upon various types of position sensors can thus be employed in the control device.

In Figs. 1–3 is shown a solution wherein four strain gauges 10 are mounted on surfaces 11 that are provided for the purpose at the level of the above mentioned center or zone 8 of swinging. In the peripheral direction these surfaces and sensors are arranged pair-wise in the directions of the major axis and the minor axis, respectively, of the spring member, so that two of the sensors react to movements in the one direction (forward-backward) while the other sensor pair senses movements in the other direction (sidewardly). The four strain gauges consequently produce voltages which show how the stick is swung out from its neutral position in the respective directions and which, after assembly, represent the angular position and the direction that the second stick part 5 assumes in relation to the first part 4. The signal is proportional to the position with a good approximation, in every case with the small angles of deflection of about 3°–5° that are usually involved in connection with an airplane.

In Figs. 4–6 is shown a solution with signal producing devices 15 in the form of two differential transformers 16 of the RVDT (rotary variable differential transformer) type, which are mounted on the inside of the stationary stick part by means of fill-ins 17. The sensors are so mounted that their rotatable elements have their axes of rotation extending through the center or zone 8 of swinging of the spring member. The axes form a 90° angle with one another and, if the spring cross-section is elliptical, they should also coincide with the major axis and the minor axis, respectively. The movements of the movable stick part 5 in each axis are transferred from the securement element 9 by means of a feeler 18 which is formed as a leaf spring and is stiff in a plane transverse to the axis of rotation of the differential transformer but is flexible in the direction transverse to that plane. In consequence, each feeler 18 faithfully transfers to the differential transformer 16 a movement or motion component in the plane just mentioned. Stick movements in the last mentioned direction or components thereof, on the other hand, do not affect the same differential transformer.

The signals generated in the control stick are processed in a signal processing unit 12 and by means of a servo unit 13 control a radar antenna 14 in the same direction as the stick deflection in relation to a common reference direction, which in the described application is preferably the longitudinal axis of the airplane, and to an angle that is proportional to the stick deflection.

From the foregoing it will be seen that the invention eliminates the disadvantages of known constructions that are pointed out in the introduction, by reason of its freeing the cavity in the stick that would otherwise be occupied by a universal joint or the like, thus providing the possibility for building the signal emitter as well as the spring member into the stick itself.

The control device construction according to the invention is thus characterized by great mechanical simplicity and a reliable signal function, even in installations wherein a difficult dynamic environment prevails.

## Claims

1. Control device arranged to generate, through manual control movements, electrical signals which serve to adjust the position of an element (14), comprising a body part (1) that forms a supporting surface (2) which is adapted to support the hand of an operator during performance of control movements, a control stick (3) that projects outwardly from the supporting surface (2) and comprises first and second stick parts (4, 5) arranged one following the other in the lengthwise direction of the stick, of which the first stick part (4) is stationary with respect to the body part (1) while the second stick part (5), upon which control movements are performed, is movable forwards, backwards and laterally relative to the first stick part towards and from a neutral position, wherein the stick parts are so arranged that a control movement which is performed upon the second stick part (5) takes place as a swinging in the above mentioned directions about a center or a zone (8) which is located in a cavity (7) in the first stick part (4), and a signal emitting device (10; 15) responsive to the movement of the second stick part and electrically connected with the element (14) for generating signals for the adjustment of the element (14) in dependence upon control movements of the second stick part (5), characterized in that the two stick parts (4, 5) are mutually connected by means of a rod-shaped spring member (6) extending centrally through the cavity (7) in the lengthwise direction of the control stick (3), which spring member has a defined neutral position, the swinging movement of the second stick part (5) from said neutral position producing an opposing moment that tends to return the second stick part to the neutral position, and in that the signal emitting device (10; 15) is contained in the cavity (7) alongside the spring member (6) and arranged to detect the position of the second stick part (5) relative to the first stick part (4).

2. Control device according to claim 1, wherein to provide control movements along two axes of which a first represents bending forward or backward of an operator's hand around his wrist and a second represents sideways movement of the hand and forearm, the spring member (6), along at least the larger portion of its free length, which provides for the elastic deflection, has a cross-section with a larger resistance moment in the direction of movement corresponding to the first axis than in the direction of movement perpendicular thereto that corresponds to the second axis, for the purpose of matching the opposing moment of the spring member (6) to the respective muscular forces required of the operator in the two directions of movement.

3. Control device according to claim 1 or 2, wherein the spring member (6), along at least a part of its length that preferably comprises said center or zone (8) of swinging, has pairs of flat surfaces (11) facing in opposite directions, and that the spring member supports said signal emitting device (10) in the form of a strain gauge fixed on each surface.

4. Control device according to claim 1 or 2, wherein said signal emitting device (15) mounted on a mounting member (17) attached to the inside wall of the first stick part comprises a differential transformer (16) for sensing rotation movements about an axis of rotation extending at an angle to the spring element and through said center or zone (8) of swinging, and a feeler (18) extending from said axis of rotation lengthwise along the spring member (6) to the second stick part (5), which feeler is preferably formed as a leaf spring and is stiff in a plane transverse to said axis of rotation but is flexible in the direction transverse to that plane.

## Patentansprüche

1. Steuervorrichtung, die mittels manueller Steuerbewegungen elektrische Signale zur Lageeinstellung eines Bauelementes (14) erzeugt, bestehend aus einem Gehäuseteil (1) mit einer Abstützfläche (2) für die Auflage der Hand der Bedienungsperson bei Vornahme der Steuerbewegungen, einem Steuerknüppel (3), welcher über die Abstützfläche (2) nach außen ragt und aus ersten und zweiten Knüppelteilen (4, 5) besteht, die in Längsrichtung des Steuerknüppels hintereinander angeordnet sind, wobei der erste Knüppelteil (4) bezüglich des Gehäuseteiles (1) stationär und der zweite Steuerknüppelteil (5), an dem die Steuerbewegungen ausgeführt werden, bezüglich einer Neutralstellung relativ zum ersten Steuerknüppelteil vorwärts, rückwärts und seitlich beweglich ist, wobei die Steuerknüppelteile so angeordnet sind, daß sich eine Steuerbewegung am zweiten Steuerknüppelteil (5) als Schwenkbewegung in den vorerwähnten Richtungen um eine Mitte oder Zone (8) darstellt, die sich in einer Ausnehmung (7) des ersten Steuerknüppelteiles (4) befindet, und einem Signalerzeuger (10; 15), welcher auf die Bewegung des zweiten Steuerknüppelteiles (5) anspricht und elektrisch mit dem Bauelement (14) verbunden ist, um die Signale zu erzeugen, mit denen das Bauelement (14) in Abhängigkeit von den Steuerbewegungen des zweiten Steuerknüppelteiles (5) verstellt wird, dadurch gekennzeichnet, daß die zwei Steuerknüppelteile (4, 5) miteinander über eine stabförmige Feder (6) verbunden sind, die sich mittig durch die Ausnehmung (7) in Längsrichtung des Steuerknüppels (3) erstreckt und eine definierte Neutralstellung aufweist, wobei die Schwenkbewegung des zweiten Steuerknüppelteiles (5) aus der Neutralstellung heraus ein entgegengesetztes Moment erzeugt, welches am zweiten Steuerknüppelteil eine Rückstellkraft in Richtung Neutralstellung liefert, und daß sich der Signalerzeuger (10; 15) in der Ausnehmung (7) neben der Feder (6) befindet und die Lage des zweiten Steuerknüppelteiles (5) bezüglich des ersten Steuerknüppelteiles (4) erfaßt.

2. Steuervorrichtung nach Anspruch 1, dadurch gekennzeichnet, daß zur Ermöglichung von Steuerbewegungen entlang zweier Achsen, von denen eine erste einer Vorwärts- oder Rückwärtsbiegung der Hand der Bedienungsperson und eine zweite eine seitliche Verkippung von Hand und Unterarm verkörpert, die Feder (6) entlang mindestens des größeren Teiles ihren freien Länge, welche die elastische Verbiegung ermöglicht, einen Querschnitt aufweist, der in Richtung der Bewegung entsprechend der ersten Achse ein größeres Widerstandsmoment hat als in Bewegungsrichtung senkrecht dazu entsprechend der zweiten Achse, damit die Rückstellmomente der Feder (6) gegenüber den entsprechenden von der Bedienungsperson geforderten Muskelkräften in den zwei Bewegungsrichtungen angepaßt sind.

3. Steuervorrichtung nach Anspruch 1 oder 2, dadurch gekennzeichnet, daß die Feder (6) entlang mindestens einem Teil ihrer Länge, in dem vorzugsweise die Schwingungsmitte oder -zone (8) liegt, zwei gegenüberliegende Flachstellen (11) aufweist, und daß die Feder (6) Signalerzeuger (10) in Form von Spannungssensoren trägt, die auf jeder der Flachstellen (11) befestigt sind.

4. Steuervorrichtung nach Anspruch 1 oder 2, dadurch gekennzeichnet, daß der Signalerzeuger (15) auf einem Träger (17) gelagert ist, der an der Innenseite des ersten Steuerknüppelteiles (4) befestigt ist und von einem Differentialtransformator (16) gebildet wird, der Drehbewegungen um eine Drehachse erfaßt, die sich winklig zur stabförmigen Feder (6) durch die Schwingungsmitte oder -zone (8) erstreckt, und daß ein Fühler (18) der sich von der Rotationsachse in Längsrichtung der Stabfeder (6) zum zweiten Steuerknüppelteil (5) erstreckt, vorzugsweise als Blattfeder ausgebildet ist, welche in einer Ebene quer zur Rotationsachse steif aber in einer Richtung quer dazu flexibel ist.

**Revendications**

1. Dispositif de commande agencé pour générer, par des moyens de commande manuels, des signaux électriques qui servent à ajuster la position d'un élément (14) comprenant une partie formant corps (1) qui constitue une surface d'appui (2) qui est adaptée pour supporter la main d'un opérateur pendant l'exécution de mouvements de commande, un levier de commande (3) qui fait saillie vers l'extérieur à partir de la surface d'appui (2) et comprend des première et seconde parties de levier (4, 5) disposées l'une derrière l'autre dans la direction longitudinale du levier, dans lesquelles la première partie de levier (4) est fixe par rapport à la partie formant corps (1) tandis que la seconde partie de levier (5), sur laquelle les mouvements de commande sont effectués, est mobile vers l'avant, vers l'arrière et latéralement par rapport à la première partie de levier vers et à partir d'une position de point mort, dans lequel les parties du levier sont disposées de telle sorte qu'un mouvement de commande effectué sur la seconde partie de levier (5) s'effectue sous forme d'un pivotement dans les directions mentionnées ci-dessus, autour d'un centre ou zone (8) situé dans une cavité (7) dans la première partie de levier (4) et un dispositif émetteur de signaux (10; 15) sensible au mouvement de la seconde partie de levier et relié électriquement à l'élément (14) pour émettre des signaux de réglage de l'élément (14) en fonction des mouvements de commande de la seconde partie de levier (5), caractérisé en ce que les deux parties de levier (4, 5) sont reliées mutuellement au moyen d'un organe élastique en forme de tige (6) s'étendant axialement au travers de la cavité (7) dans la direction longitudinale du levier de commande (3), ledit organe élastique ayant une position de point mort définie, le mouvement de pivotement de la seconde partie de levier (5) à partir de ladite position de point mort produisant un moment antagoniste tendant à ramener la seconde partie de levier en position de point mort, et en ce que le dispositif émetteur de signaux (10; 15) est logé dans la cavité (7) le long de l'organe élastique (6) et agencé pour détecter la position de la seconde partie de levier (5) par rapport à la première partie de levier (4).

2. Dispositif de commande selon la revendication 1, dans lequel, pour exécuter les mouvements de commande le long de deux axes, dont un premier représente la flexion vers l'avant ou vers l'arrière de la main d'un opérateur autour de son poignet et un second représente le mouvement latéral de la main et de l'avant-bras, l'organe élastique (6), au moins sur la partie la plus grande de sa course libre assurant la flexion élastique, a une section transversale ayant un moment résistant dans la direction du mouvement correspondant au premier axe plus grande que dans la direction du mouvement perpendiculaire à celui-ci, correspondant au second axe, dans le but d'adapter le moment antagoniste de l'organe élastique (6) aux forces musculaires respectives requises de l'opérateur dans les deux directions de mouvement.

3. Dispositif de commande selon la revendication 1 ou 2, dans lequel l'organe élastique (6), le long d'une partie au moins de sa longueur qui comprend, de préférence, ledit centre ou zone (8) de pivotement, comporte des paires de surfaces planes (11) tournées dans des directions opposées, et l'organe élastique supporte ledit dispositif émetteur de signaux (10) ayant la forme d'un extensomètre fixé sur chaque surface.

4. Dispositif de commande selon la revendication 1 ou 2, dans lequel ledit dispositif émetteur de signaux (15) monté sur un organe de montage (17) fixé sur la paroi intérieure de la première partie de levier comprend un transformateur différentiel (16) pour détecter les mouvements de rotation autour d'un axe de rotation disposé angulairement par rapport à l'organe élastique et au travers dudit centre ou zone de pivotement (8), et un palpeur (18) s'étendant à partir dudit axe de rotation, longitudinalement le long de l'organe élastique (6) vers la seconde partie de levier (5), ledit palpeur étant conformé, de préférence, comme une lame de ressort et étant rigide dans un plan transversal audit axe de rotation mais étant flexible dans la direction transversale à ce plan.

FIG 1

FIG 2

FIG 3

FIG 4

FIG 5

FIG 6